# EUROPÄISCHE PATENTANMELDUNG

(11) **EP 0 693 534 A1**
(43) Veröffentlichungstag der Anmeldung: **24.01.1996**
(21) Anmeldenummer: 95810394.7
(22) Anmeldetag: 13.06.1995
(51) Int. Cl.: C09B 43/16, C09B 62/09

(54) **Azofarbstoffe, Verfahren zu deren Herstellung und deren Verwendung**

(30) Priorität: 20.06.1994 CH 1951/94
(71) Anmelder: CIBA-GEIGY AG, CH-4002 Basel (CH)
(72) Erfinder: Urs, Lauk, Dr., CH-8047 Zürich (CH)

(57) **Zusammenfassung**

Azofarbstoffe der Formel 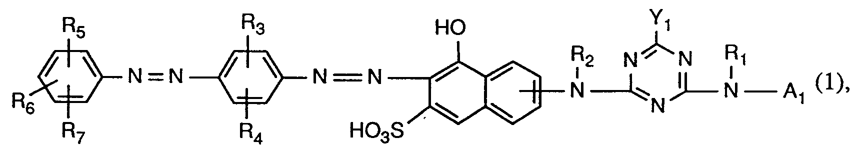
worin
R₁ und R₂ unabhängig voneinander Wasserstoff oder gegebenenfalls substituiertes C₁-C₄-Alkyl bedeuten,
R₃, R₄, R₅, R₆ und R₇ unabhängig voneinander Wasserstoff, Halogen, Sulfo, Carbamoyl, Carboxy, unsubstituiertes oder durch Hydroxy substituiertes C₁-C₄-Alkyl oder C₁-C₄-Alkoxy, unsubstituiertes oder im Alkylteil durch Hydroxy oder C₁-C₄-Alkoxy substituiertes C₂-C₄-Alkanoylamino oder unsubstituiertes oder in der endständigen Aminogruppe ein- oder zweifach durch C₁-C₄-Alkyl substituiertes Ureido sind, Y₁ Hydroxy, Halogen, C₁-C₄-Alkoxy, C₁-C₄-Alkylthio, Amino, unsubstituiertes oder im Alkylteil durch Hydroxy, Sulfo, Carboxy oder C₁-C₄-Alkoxy substituiertes N-Mono- oder N,N-Di-C₁-C₄-Alkylamino, unsubstituiertes oder im Cycloalkylring durch C₁-C₄-Alkyl substituiertes C₅-C₇-Cycloalkylamino, unsubstituiertes oder im Phenylring durch C₁-C₄-Alkyl, C₁-C₄-Alkoxy, Carboxy, Sulfo oder Halogen substituiertes Phenylamino oder N-C₁-C₄-Alkyl-N-phenylamino, Morpholino oder Piperidin-1-yl ist, und A₁ der Rest eines metallfreien Monoazofarbstoffes ist,
sind Direktfarbstoffe für verschiedene Substrate, insbesondere cellulosische Fasermaterialien. Sie sind hochtemperaturstabil und eignen sich deshalb besonders gut zum einbadigen, einstufigen Färben von Polyester/Baumwoll-Mischgeweben mit einem Dispersionsfarbstoff für die Polyesterfasern unter den Färbebedingungen für Polyesterfasern.

## Beschreibung

Die vorliegende Erfindung betrifft neue Azofarbstoffe, Verfahren zu deren Herstellung sowie deren Verwendung zum Färben und Bedrucken von Fasermaterialien, insbesondere von textilen Fasermaterialien.

Die der vorliegenden Erfindung zugrunde liegende Aufgabe war es, Farbstoffe zu finden, welche zum Färben von stickstoffhaltigen und hydroxygruppenhaltigen Fasermaterialien, insbesondere von cellulosischen Fasermaterialien, geeignet sind, gute Echtheitseigenschaften aufweisen und hochtemperaturstabil sind.

Es wurde nun gefunden, dass die nachstehenden Azofarbstoffe der Formel (1) diesen Anforderungen genügen.

Gegenstand der vorliegenden Erfindung sind somit Azofarbstoffe der Formel 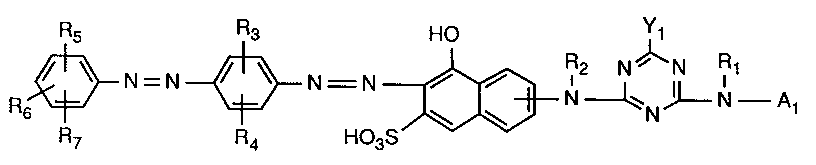
worin
R₁ und R₂ unabhängig voneinander Wasserstoff oder gegebenenfalls substituiertes C₁-C₄-Alkyl bedeuten,
R₃, R₄, R₅, R₆ und R₇ unabhängig voneinander Wasserstoff, Halogen, Sulfo, Carbamoyl, Carboxy, unsubstituiertes oder durch Hydroxy substituiertes C₁-C₄-Alkyl oder C₁-C₄-Alkoxy, unsubstituiertes oder im Alkylteil durch Hydroxy oder C₁-C₄-Alkoxy substituiertes C₂-C₄-Alkanoylamino oder unsubstituiertes oder in der endständigen Aminogruppe ein- oder zweifach durch C₁-C₄-Alkyl substituiertes Ureido sind,
Y₁ Hydroxy, Halogen, C₁-C₄-Alkoxy, C₁-C₄-Alkylthio, Amino, unsubstituiertes oder im Alkylteil durch Hydroxy, Sulfo, Carboxy oder C₁-C₄-Alkoxy substituiertes N-Mono- oder N,N-Di-C₁-C₄-Alkylamino, unsubstituiertes oder im Cycloalkylring durch C₁-C₄-Alkyl substituiertes C₅-C₇-Cycloalkylamino, unsubstituiertes oder im Phenylring durch C₁-C₄-Alkyl, C₁-C₄-Alkoxy, Carboxy, Sulfo oder Halogen substituiertes Phenylamino oder N-C₁-C₄-Alkyl-N-phenylamino, Morpholino oder Piperidin-1-yl ist, und
A₁ der Rest eines metallfreien Monoazofarbstoffes ist.

Als C₁-C₄-Alkyl kommen für R₁, R₂, R₃, R₄, R₅, R₆ und R₇ z.B. Methyl, Äthyl, Propyl, Isopropyl, Butyl, sek.-Butyl, tert.-Butyl oder Isobutyl, insbesondere Methyl oder Aethyl, vorzugsweise Methyl, in Betracht. Die Reste R₁ und R₂ in der Bedeutung als C₁-C₄-Alkyl können z.B. durch Hydroxy, C₁-C₄-Alkoxy, Halogen oder Sulfato weitersubstituiert sein. Die Reste R₃, R₄, R₅, R₆ und R₇ in der Bedeutung als C₁-C₄-Alkyl können durch Hydroxy weitersubstituiert sein.

Die Bedeutung Sulfo umfasst generell die freie Säureform (-SO₃H) als auch die Salzform, wobei insbesondere Alkalimetallsalze (Li, Na, K) oder Ammoniumsalze in Frage kommen.

Als C₁-C₄-Alkoxy kommen für Y₁, R₃, R₄, R₅, R₆ und R₇ beispielsweise Methoxy, Äthoxy, Propoxy, Isopropoxy, Butoxy oder Isobutoxy, insbesondere Methoxy, in Betracht. Die Reste R₃, R₄, R₅, R₆ und R₇ in der Bedeutung als C₁-C₄-Alkoxy können durch Hydroxy weitersubstituiert sein.

Als Halogen kommen für Y₁, R₃, R₄, R₅, R₆ und R₇ z.B. Fluor oder Chlor, insbesondere Chlor, in Betracht.

Als C₂-C₄-Alkanyolamino kommen für R₃, R₄, R₅, R₆ und R₇ sowohl die unsubstituierten wie auch die im Alkylteil durch Hydroxy oder C₁-C₄-Alkoxy substituierten Reste in Betracht. Bevorzugt sind die unsubstituierten Reste, wie z.B. Acetylamino oder Propionylamino. Als Beispiele für substituierte Reste seien -NH-CO-CH₂-OH und -NH-CO-CH₂-OCH₃ genannt.

Als unsubstituiertes oder in der endständigen Aminogruppe ein- oder zweifach durch C₁-C₄-Alkyl substituiertes Ureido kommen für R₃, R₄, R₅, R₆ und R₇ z.B. -NH-CO-NH₂, -NH-CO-NH-CH₃ und -NH-CO-N(CH₃)₂ in Betracht.

Y₁ als N-Mono- oder N,N-Di-C₁-C₄-Alkylamino kann sowohl die unsubstituierten wie auch die im Alkylteil durch Hydroxy, Sulfo, Carboxy oder C₁-C₄-Alkoxy substituierten Reste umfassen. Bevorzugt sind die im Alkylteil unsubstituierten sowie insbesondere die im Alkylteil durch Hydroxy substituierten Reste. Als Beispiele seien N-β-Hydroxyäthylamino und N,N-Di-β-hydroxäthylamino genannt.

Y₁ als C₅-C₇-Cycloalkylamino kann sowohl die unsubstituierten wie auch die im Cycloalkylring durch C₁-C₄-Alkyl, wie z.B. Methyl oder Aethyl, insbesondere Methyl, substituierten Reste umfassen. Bevorzugt als solche Reste sind die entsprechenden Cyclohexylreste.

Y₁ als Phenylamino oder N-C₁-C₄-Alkyl-N-phenylamino ist vorzugsweise Phenylamino. Bevorzugt sind diese Reste im Phenylring unsubstituiert.

Als Reste A₁ eines metallfreien Monoazofarbstoffes kommen vorzugsweise solche der Formel 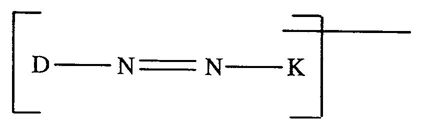
in Betracht, worin D der Rest einer Diazokomponente der Benzol- oder Naphthalinreihe und K der Rest einer Kupplungskomponente der Benzol- oder Naphthalinreihe ist.

Als Substituenten der Reste D und K kommen die für Azofarbstoffe üblichen Substituenten in Betracht. Als Beispiele seien die folgenden genannt:
Sulfo; Carboxy; Hydroxy; Carbamoyl; Cyano; Amino; Halogen, wie z.B. Fluor oder insbesondere Chlor; unsubstituiertes oder in der endständigen Aminogruppe ein- oder zweifach durch C₁-C₄-Alkyl substituiertes Ureido; unsubstituiertes oder durch Hydroxy substituiertes C₁-C₄-Alkyl oder C₁-C₄-Alkoxy; unsubstituiertes oder im Alkylteil durch Hydroxy oder C₁-C₄-Alkoxy substituiertes C₂-C₆-Alkanoylamino; sowie unsubstituiertes oder im Phenylring durch C₁-C₄-Alkyl, C₁-C₄-Alkoxy, C₂-C₄-Alkanoylamino, Sulfo, Carboxy, Halogen, Cyano oder Ureido substituiertes Phenylamino oder Benzoylamino.

R₁ und R₂ sind bevorzugt Wasserstoff oder C₁-C₄-Alkyl, insbesondere Wasserstoff.

R₃ und R₄ sind bevorzugt unabhängig voneinander Wasserstoff, C₁-C₄-Alkyl, gegebenenfalls durch Hydroxy substituiertes C₁-C₄-Alkoxy, C₂-C₄-Alkanoylamino oder Sulfo, insbesondere Wasserstoff, C₁-C₄-Alkyl, C₁-C₄-Alkoxy, C₂-C₄-Alkanoylamino oder Sulfo. Vorzugsweise bedeutet einer der Reste R₃ und R₄ Wasserstoff.

R₅, R₆ und R₇ sind bevorzugt Wasserstoff, C₁-C₄-Alkyl, C₁-C₄-Alkoxy, Sulfo oder Carbamoyl. Vorzugsweise bedeutet R₅ Sulfo oder Carbamoyl, insbesondere Sulfo.

Besonders bevorzungt ist R₅ Sulfo oder Carbamoyl, insbesondere Sulfo, und R₆ und R₇ sind unabhängig voneinander Wasserstoff, C₁-C₄-Alkyl oder C₁-C₄-Alkoxy.

Y₁ ist bevorzugt Amino, unsubstituiertes oder im Alkylteil durch Hydroxy, Sulfo, Carboxy oder C₁-C₄-Alkoxy substituiertes N-Mono- oder N,N-Di-C₁-C₄-Alkylamino, unsubstituiertes oder im Cycloalkylring durch C₁-C₄-Alkyl substituiertes C₅-C₇-Cycloalkylamino, unsubstituiertes oder im Phenylring durch C₁-C₄-Alkyl, C₁-C₄-Alkoxy, Carboxy, Sulfo oder Halogen substituiertes Phenylamino oder N-C₁-C₄-Alkyl-N-phenylamino, Morpholino oder Piperidin-1-yl.

Besonders bevorzugt ist Y₁ Amino, unsubstituiertes oder im Alkylteil durch Hydroxy substituiertes N-Mono- oder N,N-Di-C₁-C₄-Alkylamino, Cyclohexylamino, Phenylamino, Morpholino oder Piperidin-1-yl.

Ganz besonders bevorzugt ist Y₁ im Alkylteil durch Hydroxy substituiertes N-Mono- oder N,N-Di-C₁-C₄-Alkylamino oder Morpholino.

Bevorzugt sind Azofarbstoffe, worin R₁ und R₂ Wasserstoff, R₃ und R₄ unabhängig voneinander Wasserstoff, C₁-C₄-Alkyl, C₁-C₄-Alkoxy, C₂-C₄-Alkanoylamino oder Sulfo sind, R₅ Sulfo oder Carbamoyl, insbesondere Sulfo, ist und R₆ und R₇ unabhängig voneinander Wasserstoff, C₁-C₄-Alkyl oder C₁-C₄-Alkoxy sind, und Y₁ Amino, unsubstituiertes oder im Alkylteil durch Hydroxy substituiertes N-Mono- oder N,N-Di-C₁-C₄-Alkylamino, Cyclohexylamino, Phenylamino, Morpholino oder Piperidin-1-yl ist.

Besonders bevorzugt sind Azofarbstoffe, worin R₁ und R₂ Wasserstoff, R₃ und R₄ unabhängig voneinander Wasserstoff, Sulfo oder C₂-C₄-Alkanoylamino sind, R₅ Sulfo ist und R₆ und R₇ Wasserstoff sind, und Y₁ im Alkylteil durch Hydroxy substituiertes N-Mono- oder N,N-Di-C₁-C₄-Alkylamino oder Morpholino ist.

Bei dem Rest A₁ handelt es sich bevorzugt um einen Rest der Formel 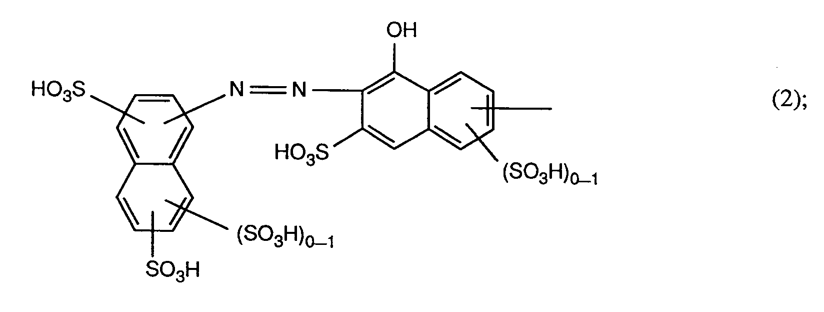 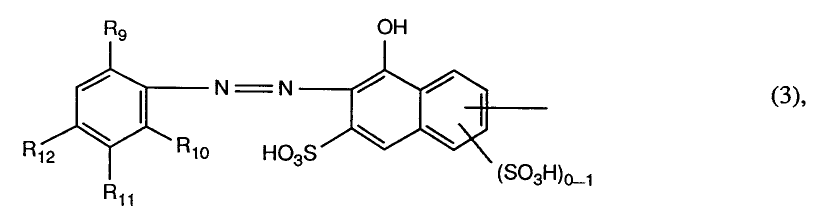
worin R₉, R₁₀, R₁₁ und R₁₂ unabhängig voneinander Wasserstoff, Sulfo, Carboxy, Halogen, Cyano, Ureido, unsubstituiertes oder durch Hydroxy substituiertes C₁-C₄-Alkyl oder C₁-C₄-Alkoxy, oder unsubstituiertes oder im Alkylteil durch Hydroxy oder C₁-C₄-Alkoxy substituiertes C₂-C₄-Alkanoylamino bedeuten; 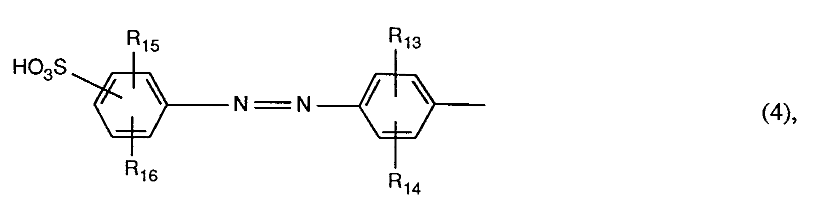
worin R₁₃, R₁₄, R₁₅ und R₁₆ die oben für R₉, R₁₀, R₁₁ und R₁₂ angegebenen Bedeutungen haben; 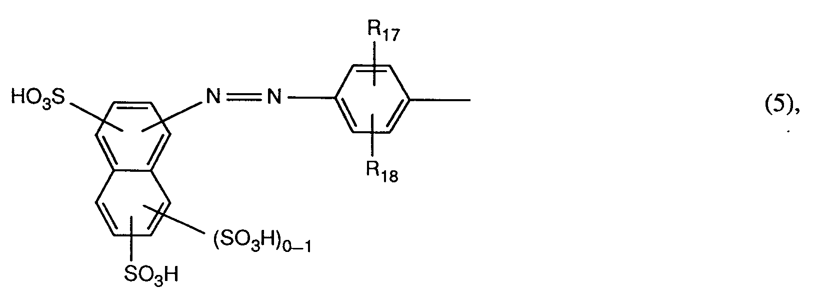
worin R₁₇ und R₁₈ die oben für R₉, R₁₀, R₁₁ und R₁₂ angegebenen Bedeutungen haben; 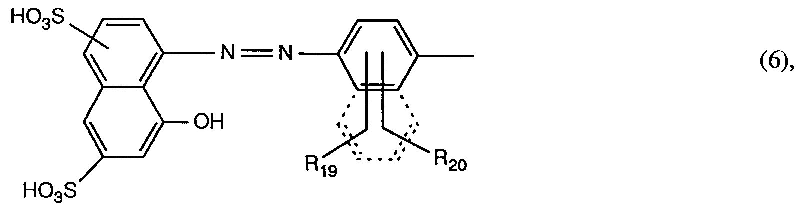
worin R₁₉ und R₂₀ die oben für R₉, R₁₀, R₁₁ und R₁₂ angegebenen Bedeutungen haben; oder 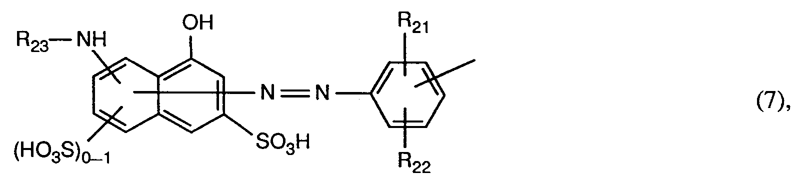
worin R₂₁ und R₂₂ die oben für R₉, R₁₀, R₁₁ und R₁₂ angegebenen Bedeutungen haben und R₂₃ Wasserstoff, gegebenenfalls durch Hydroxy oder C₁-C₄-Alkoxy substituiertes C₂-C₆-Alkanoyl, oder gegebenenfalls im Phenylring durch C₁-C₄-Alkyl, C₁-C₄-Alkoxy, C₂-C₄-Alkanoylamino, Sulfo, Carboxy, Halogen, Cyano oder Ureido substituiertes Phenyl oder Benzoyl ist.

Besonders bevorzugt als Reste A₁ sind solche der Formel (3), (6) oder (7).

Von besonderer Bedeutung sind die in den Beispielen angegebenen Reste A₁.

Ganz besonders bevorzugt sind Azofarbstoffe der Formel 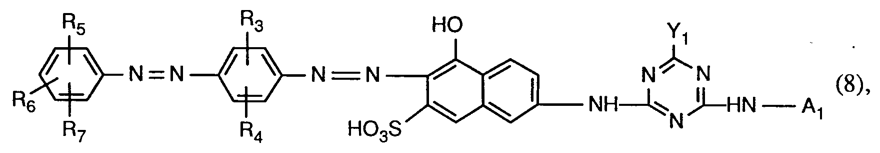
worin für R₃, R₄, R₅, R₆, R₇, Y₁ und A₁ die oben angegebenen Bedeutungen und Bevorzugungen gelten. Vorzugsweise bedeuten hierbei R₃ und R₄ unabhängig voneinander Wasserstoff, Sulfo oder C₂-C₄-Alkanoylamino, R₅ Sulfo, R₆ und R₇ Wasserstoff, Y₁ im Alkylteil durch Hydroxy substituiertes N-Mono- oder N,N-Di-C₁-C₄-Alkylamino oder Morpholino und A₁ einen Rest der Formel (3), (6) oder (7).

Gegenstand der vorliegenden Erfindung ist ferner ein Verfahren zur Herstellung der Azofarbstoffe der Formel (1), welches dadurch gekennzeichnet ist, dass man eine Verbindung der Formel 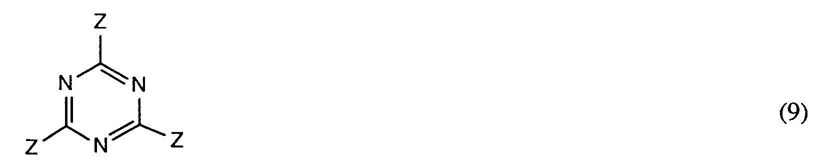
nacheinander in beliebiger Reihenfolge mit einer Verbindung der Formel 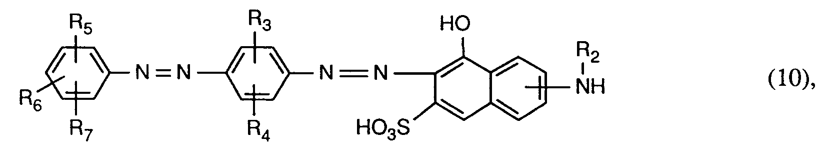
einer Verbindung der Formel

A₁-NH-R₁ (11)

und einer Verbindung der Formel

Y₁-H (12)

umsetzt, wobei R₁, R₂, R₃, R₄, R₅, R₆, R₇, Y₁ und A₁ jeweils die unter Formel (1) angegebene Bedeutung haben und Z Halogen, vorzugsweise Chlor, bedeutet.

Vorzugsweise setzt man die Trihalogenotriazinverbindung der Formel (9) zunächst mit in etwa stöchiometrischen Mengen einer der Verbindungen der Formeln (10) und (11) bei einer Temperatur von z.B. -5 bis 20°C, vorzugsweise 0 bis 5°C, um, wobei der pH-Wert durch Zugabe geeigneter Basen, z.B. Alkalimetallbasen wie Lithium-, Natrium- oder Kaliumhydroxid oder -carbonat, neutral bis sauer, vorzugsweise bei 3 bis 7, insbesondere 3 bis 5, gehalten wird. Die Umsetzung der so erhaltenen Verbindung mit der anderen Verbindung der Formel (10) oder (11) erfolgt z.B. ebenfalls in etwa stöchiometrischen Verhältnissen, vorzugsweise bei einer Temperatur von 0 bis 60°C, insbesondere 20 bis 60°C, und einem beispielsweise leicht saurem bis leicht alkalischem pH-Wert, vorzugsweise einem pH-Wert von 4 bis 8, insbesondere 5 bis 7. Bevorzugt setzt man zunächst eine Verbindung der Formel (10) mit der Verbindung der Formel (9) um.

Die gemäss dem oben beschriebenen Verfahren erhältlichen Triazinylfarbstoffe enthalten noch ein Halogenatom Z, welches durch Reaktion mit einer Verbindung der Formel (12) bei erhöhter Temperatur, vorzugsweise 70 bis 100°C, und einem neutralen bis leicht alkalischen pH-Wert, der z.B. 7 bis 12, insbesondere 8 bis 12, beträgt, in eine Gruppe Y₁ umgewandelt werden kann.

Für die Reste R₁, R₂, R₃, R₄, R₅, R₆, R₇, Y₁ und A₁ der in dem obigen Verfahren eingesetzten Verbindungen gelten die oben angegebenen Bedeutungen und Bevorzugungen.

Die Verbindungen der Formeln (9), (10), (11) und (12) sind bekannt oder können in Analogie zu bekannten Verbindungen erhalten werden.

Die Verbindungen der Formeln (10) und (11) können in bekannter Weise durch Diazotierung und Kupplung entsprechender Ausgangsverbindungen erhalten werden, wobei die Diazotierung in an sich bekannter Weise, z.B. mit einem Nitrit, z.B. mit einem Alkalimetallnitrit wie Natriumnitrit, in einem mineralsauren Medium, z.B. in einem salzsauren Medium, bei Temperaturen von beispielsweise -5 bis 40°C und vorzugsweise bei -5 bis 10°C erfolgt. Die Kupplung erfolgt in an sich bekannter Weise, bei sauren, neutralen bis schwach alkalischen pH-Werten und Temperaturen von beispielsweise 0 bis 30°C.

Die Azofarbstoffe der Formel (1) liegen entweder in der Form ihrer freien Säure oder vorzugsweise als deren Salze vor.

Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Mono-, Di- oder Triäthanolamins genannt.

Ein weiterer Gegenstand der vorliegenden Erfindung ist die Verwendung der Azofarbstoffe der Formel (1) zum Färben oder Bedrucken von stickstoffhaltigen und insbesondere hydroxylgruppenhaltigen Fasermaterialien.

Die erfindungsgemässen Azofarbstoffe der Formel (1) eignen sich also zum Färben und Bedrucken von stickstoffhaltigen oder insbesondere von cellulosischen Fasermaterialien, vorzugsweise von textilen Fasermaterialien, aus Seide, Wolle oder synthetischen Polyamiden, sowie bevorzugt aus den cellulosischen Fasern, wie Rayon, Baumwolle oder Hanf.

Bezüglich ihrer färberischen Eigenschaften können sie als direktziehende oder Direktfarbstoffe (C.I. direct dyes) bezeichnet werden.

Ebenfalls können textile Fasermaterialien aus Mischfasern, wie z.B. aus Wolle/Baumwoll-, Polyamid/Baumwoll-, Polyacryl/Baumwoll- oder insbesondere Polyester/Baumwoll-Mischfasern durch Einbad-Färbeverfahren und in Gegenwart von Farbstoffen für die jeweils anderen Fasertypen gefärbt werden.

Die textilen Fasermaterialien können in den verschiedensten Verarbeitungszuständen vorliegen, wie z.B. als Faser, Garn, Gewebe oder Gewirke.

Neben den textilen Substraten können auch Leder und Papier mit erfindungsgemässen Azofarbstoffen der Formel (1) gefärbt werden.

Man erhält egale Färbungen in roten Farbtönen mit guten Allgemeinechtheiten, insbesondere guten Reib-, Nass-, Nassreib-, Schweiss- und Lichtechtheiten. Sofern nötig, kann man die Nassechtheiten, insbesondere die Waschechtheit, der erhaltenen Direktfärbungen und -drucke durch eine Nachbehandlung mit sog. Fixiermitteln noch wesentlich verbessern.

Die erfindungsgemässen Farbstoffe der Formel (1) sind gut mit anderen Farbstoffen, insbesondere Dispersionsfarbstoffen kombinierbar. Die erfindungsgemässen Farbstoffe weisen eine ausreichende Hochtemperatur-Stabilität auf und lassen sich so unter den Färbebedingungen für Polyesterfasern, d.h. bei Temperaturen im Bereich von etwa 100 bis 150°C, vorzugsweise von 110 bis 130°C, aus wässriger Flotte und bei einem pH-Wert von 4 bis 7,5, vorzugsweise 5 bis 7, färben.

Damit ist es möglich, übliche Dispersionsfarbstoffe zusammen mit den erfindungsgemässen Farbstoffen der Formel (1) in einem einstufigen, einbadigen Verfahren zum Färben von Polyester/Baumwoll-Mischfasern (Mischgewebe) einzusetzen, wobei beide Faserarten gleichmässig und echt durch den jeweiligen Farbstoff angefärbt werden. Verwendet man einen Dispersionsfarbstoff mit gleicher Nuance wie der erfindungsgemässe Farbstoff sie aufweist, so ist es auch möglich Ton-in-Ton-Färbungen zu erhalten.

Mit der Bereitstellung der erfindungsgemässen Farbstoffe der Formel (1) kann man das Färben von textilen Mischfasern (Mischgeweben), z.B. solchen aus Polyester- und Cellulosefasern, wesentlich vereinfachen. Die an sich übliche Färbung jeder Faserart einer Fasermischung in einem separaten Arbeitsgang unter Anwendung unterschiedlicher Färbebedingungen ist damit nicht mehr nötig.

Die folgenden Beispiele dienen zur Erläuterung der Erfindung. Teile und Prozente beziehen sich auf das Gewicht, sofern nicht anders angegeben. Gewichtsteile und Volumenteile stehen in gleicher Beziehung zueinander wie Kilogramm und Liter. Die Temperaturen sind in Celsiusgraden angegeben.

### Beispiel 1:

a) 9,23 Teile Cyanurchlorid werden mit 200 Teilen Eiswasser verrührt und auf eine Temperatur von 0 bis 5°C abgekühlt. Zu dieser Suspension tropft man eine Lösung, welche 800 Teile Wasser und 30,5 Teile der in Form der freien Säure angegebenen Verbindung der Formel 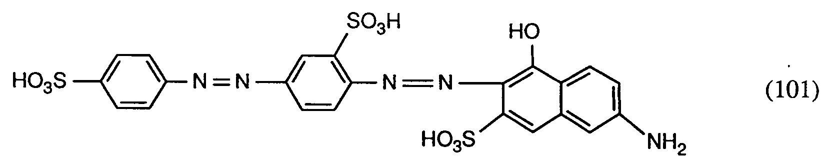 enthält, innerhalb eines Zeitraums von ca. 1,5 Stunden zu, wobei der pH durch Zugabe einer 2-normalen Kaliumhydrogencarbonatlösung bei einem Wert von 3 gehalten wird. Anschliessend wird der pH auf einen Wert von 5 gestellt und man lässt ca. 3 bis 4 Stunden bei Raumtemperatur nachreagieren. Zu dieser Lösung wird dann bei Raumtemperatur eine Lösung, welche 300 Teile Wasser und 22,7 Teile der in Form der freien Säure angegebenen Verbindung der Formel 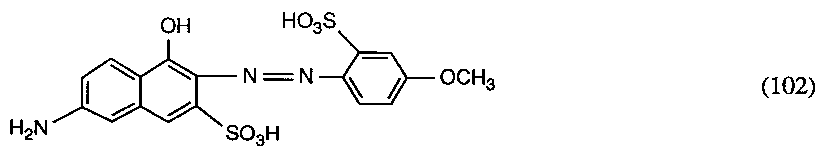 enthält, zugetropft, wobei der pH durch Zugabe einer 2-normalen Kaliumhydrogencarbonatlösung bei einem Wert von 5,7 gehalten wird. Dann wird die Reaktionsmischung bei dem pH-Wert von 5,7 auf eine Temperatur von 55°C erwärmt, bis keine Kaliumhydrogencarbonatlösung mehr verbraucht wird. Man erhält eine Lösung, welche die in Form der freien Säure angegebene Verbindung der Formel 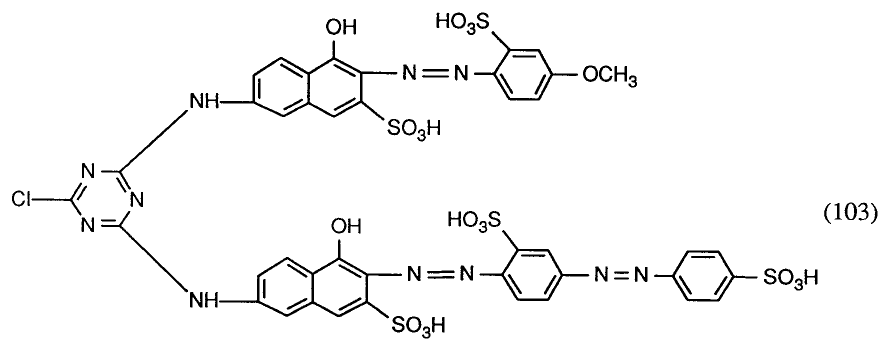 enthält.
b) Zu der wie oben angegeben erhältlichen Lösung werden 2,85 Teile Morpholin gegeben und die Lösung wird auf eine Temperatur von 85°C erhitzt, wobei der pH durch Zugabe einer 4-normalen wässrigen Natriumhydroxidlösung bei einem Wert von 8,5 gehalten wird. Diese dritte Kondensation dauert ca. 3 Stunden. Anschliessend wird bei einer Temperatur von 60°C mit 200 Teilen Natriumchlorid ausgesalzen. Nach Filtration und Trocknung erhält man einen Farbstoff, der in Form der freien Säure der Verbindung der Formel 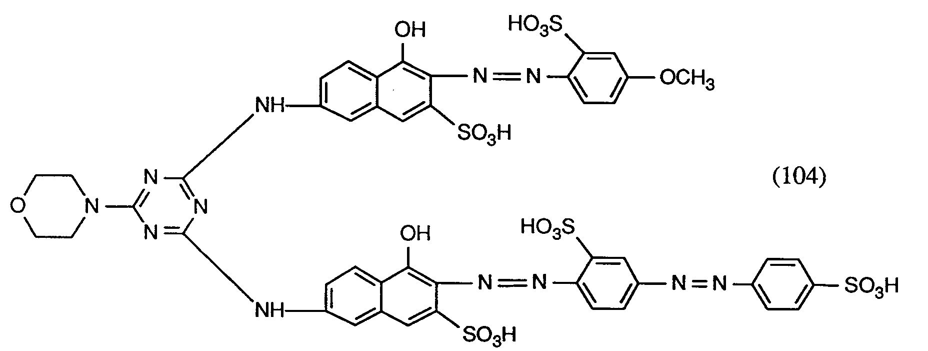 entspricht, und der Baumwolle in roten Farbtönen färbt.

### Beispiel 2:

a) Verfährt man wie im Schritt a) des Beispiels 1 angegeben, verwendet jedoch anstelle von 22,7 Teilen der Verbindung der Formel (102) eine äquimolare Menge der in Form der freien Säure angegebenen Verbindung der Formel 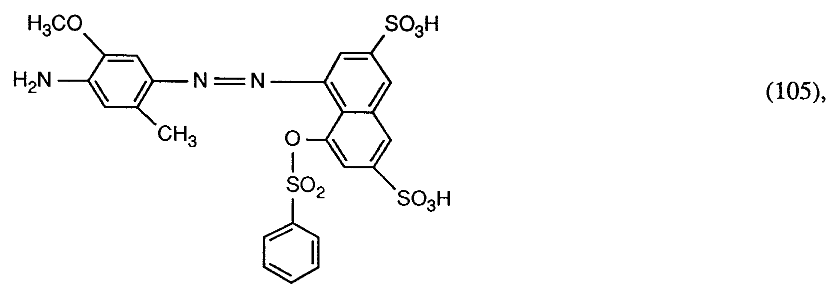 so erhält man eine Lösung, welche die in Form der freien Säure angegebene Verbindung der Formel 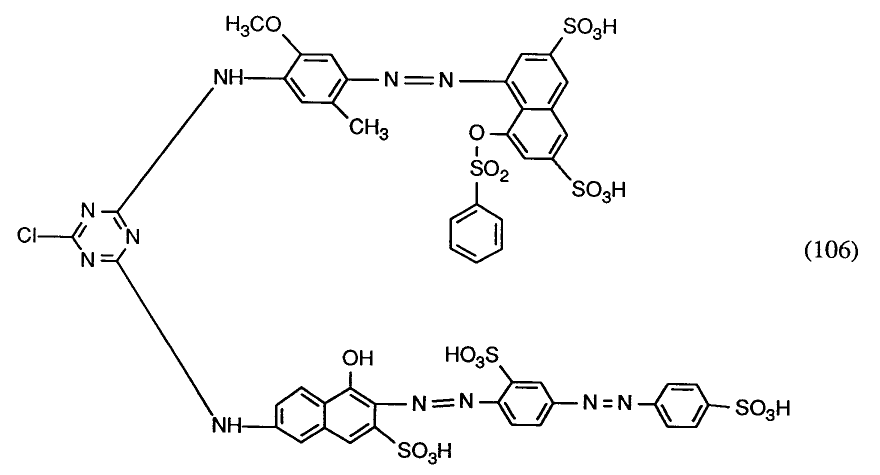 enthält.
b) Zu der wie oben angegeben erhältlichen Lösung werden 2,85 Teile Morpholin gegeben und die Lösung wird auf eine Temperatur von 85°C erhitzt, wobei der pH durch Zugabe einer 4-normalen wässrigen Natriumhydroxidlösung bei einem Wert von 8,5 gehalten wird. Diese dritte Kondensation dauert ca. 3 Stunden. Dann werden 42 Teile einer wässrigen Natriumhydroxidlösung (30%) zugesetzt und es wird bei einer Temperatur von 85°C innerhalb von 40 Minuten der Benzolsulfonsäurerest abgespalten. Anschliessend wird bei einer Temperatur von 60°C mit 200 Teilen Natriumchlorid ausgesalzen. Nach Filtration und Trocknung erhält man einen Farbstoff, der in Form der freien Säure der Verbindung der Formel 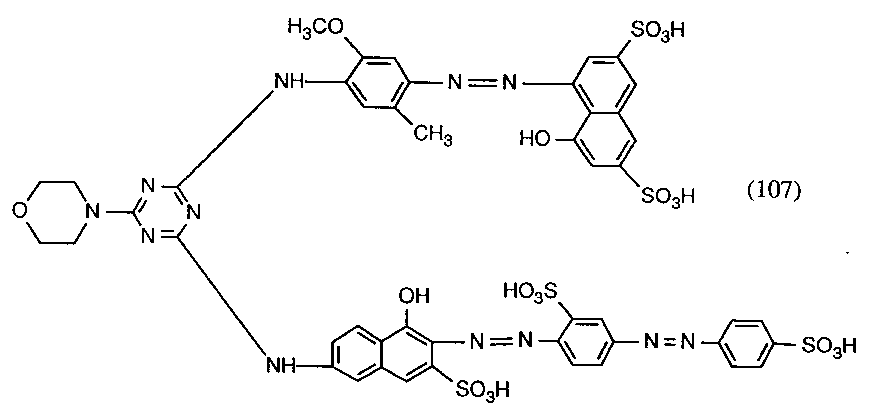 entspricht, und der Baumwolle in roten Farbtönen färbt.

### Beispiele 3 bis 37:

In analoger Weise zu den Beispielen 1 und 2 können die in Tabelle 1 in Form der freien Säure angegebenen Farbstoffe der allgemeinen Formel 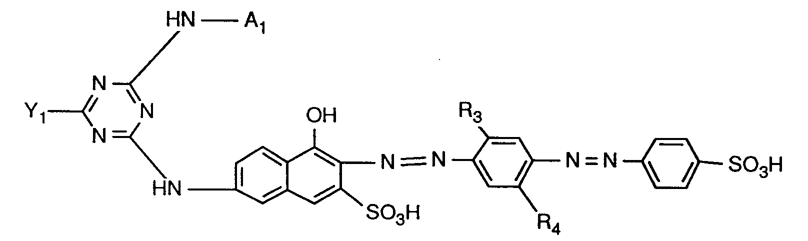
erhalten werden, wobei A₁, Y₁, R₃ und R₄ die in Tabelle 1 angegebenen Bedeutungen haben. Die in Tabelle 1 angegebenen Farbstoffe färben Baumwolle in roten Farbtönen.

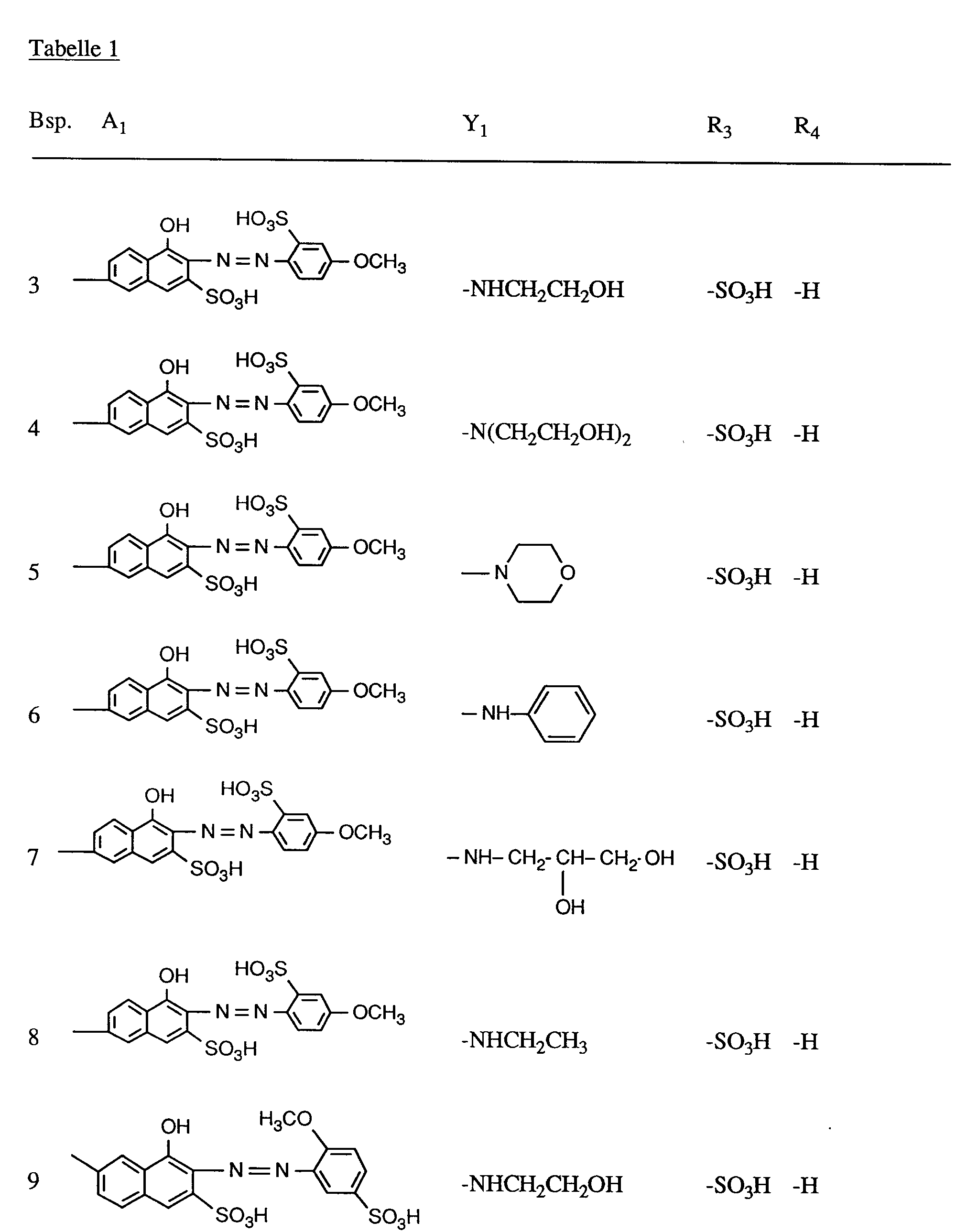

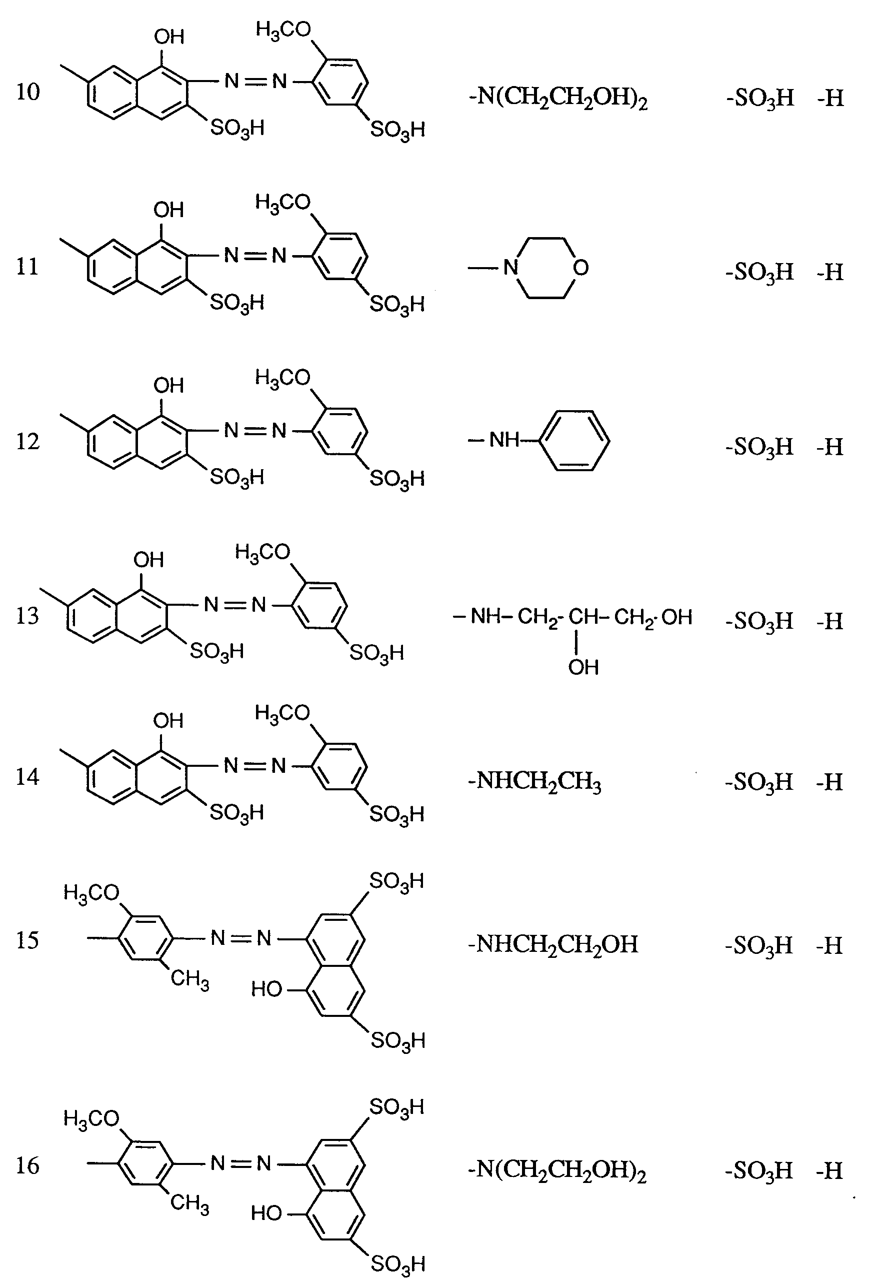

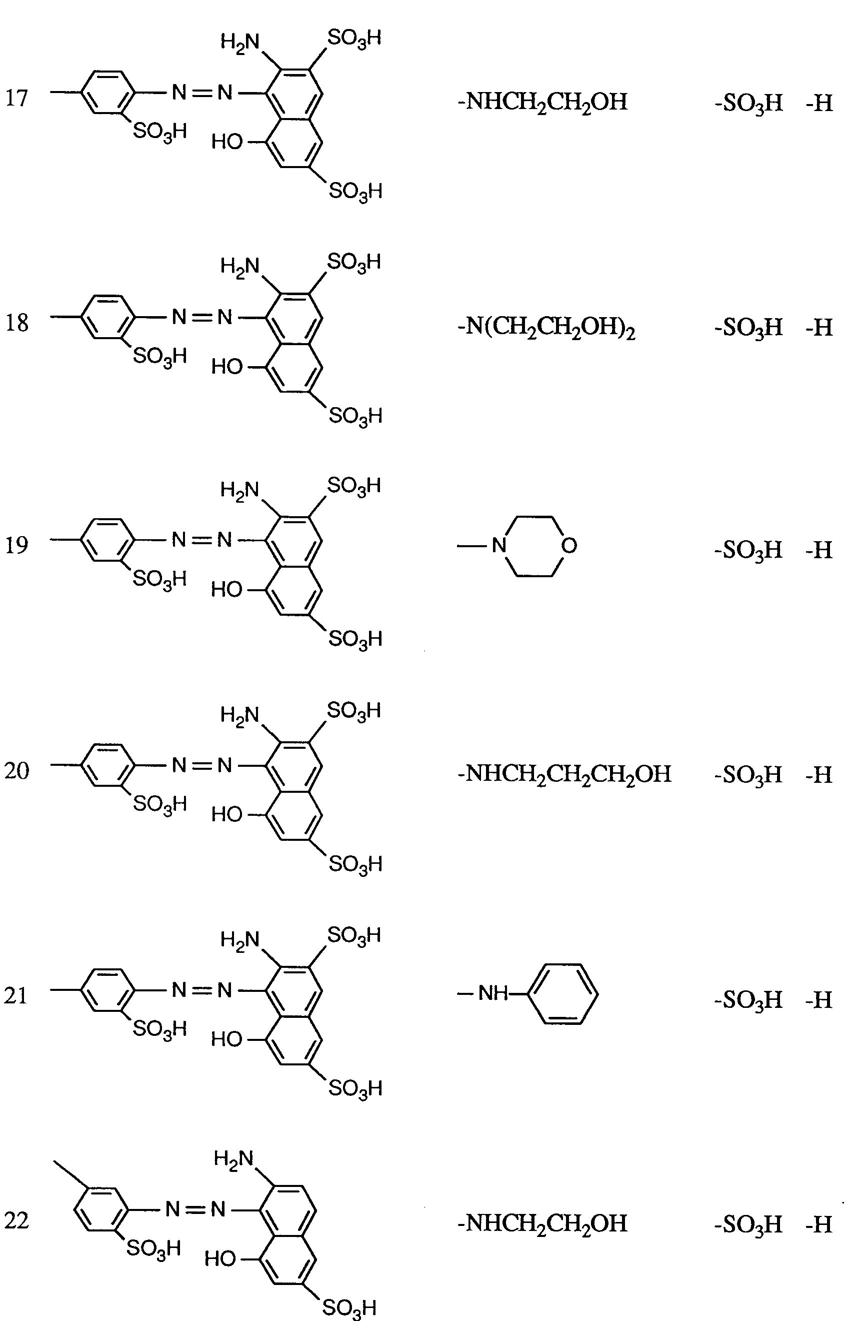

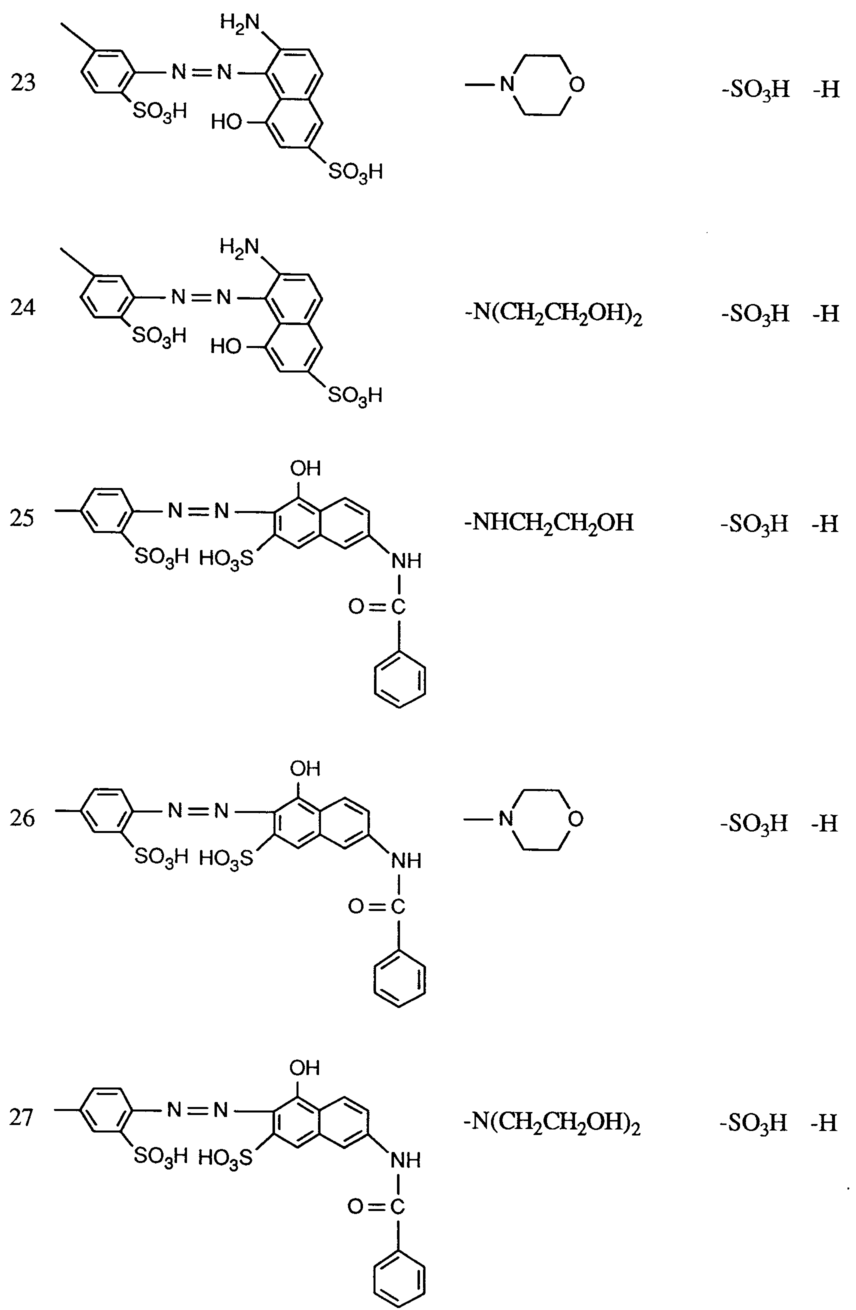

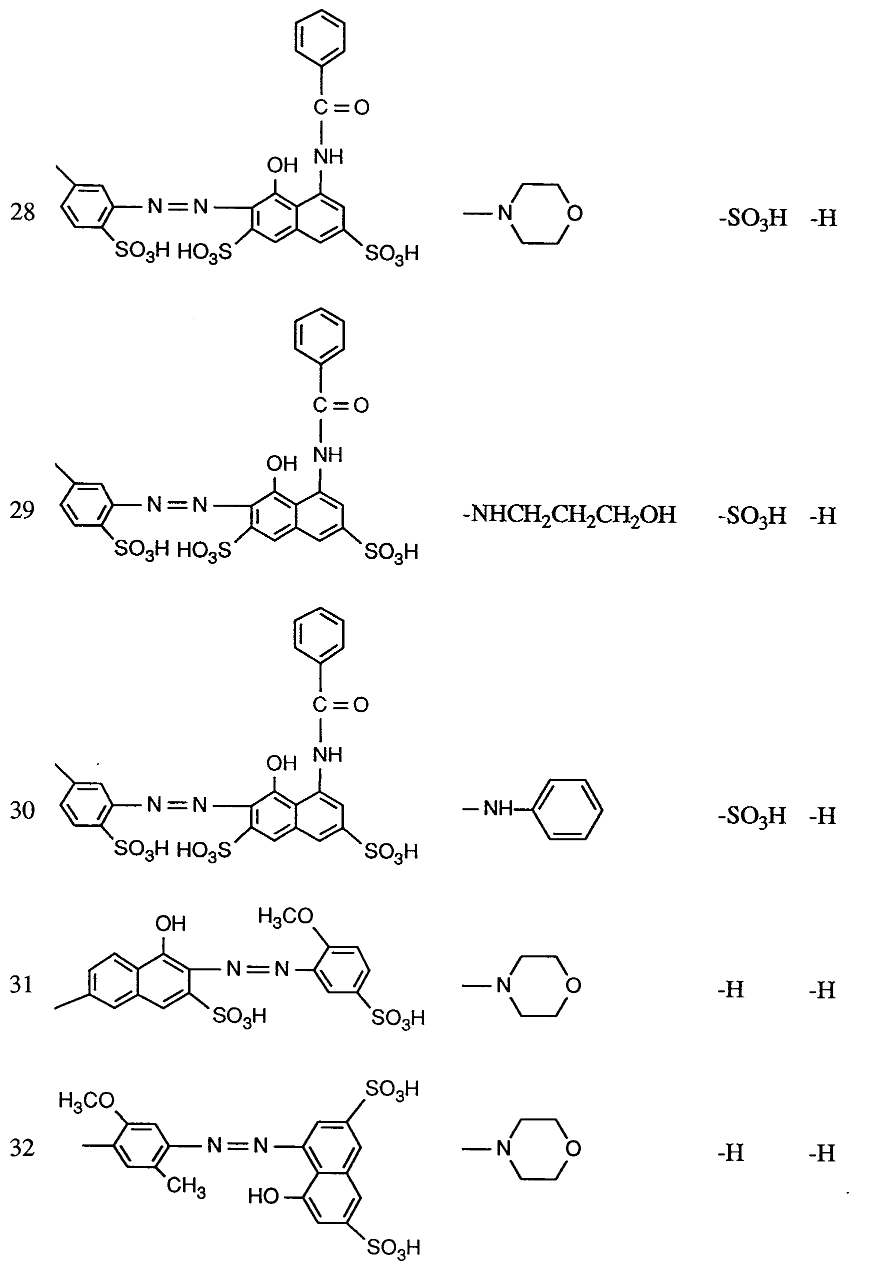

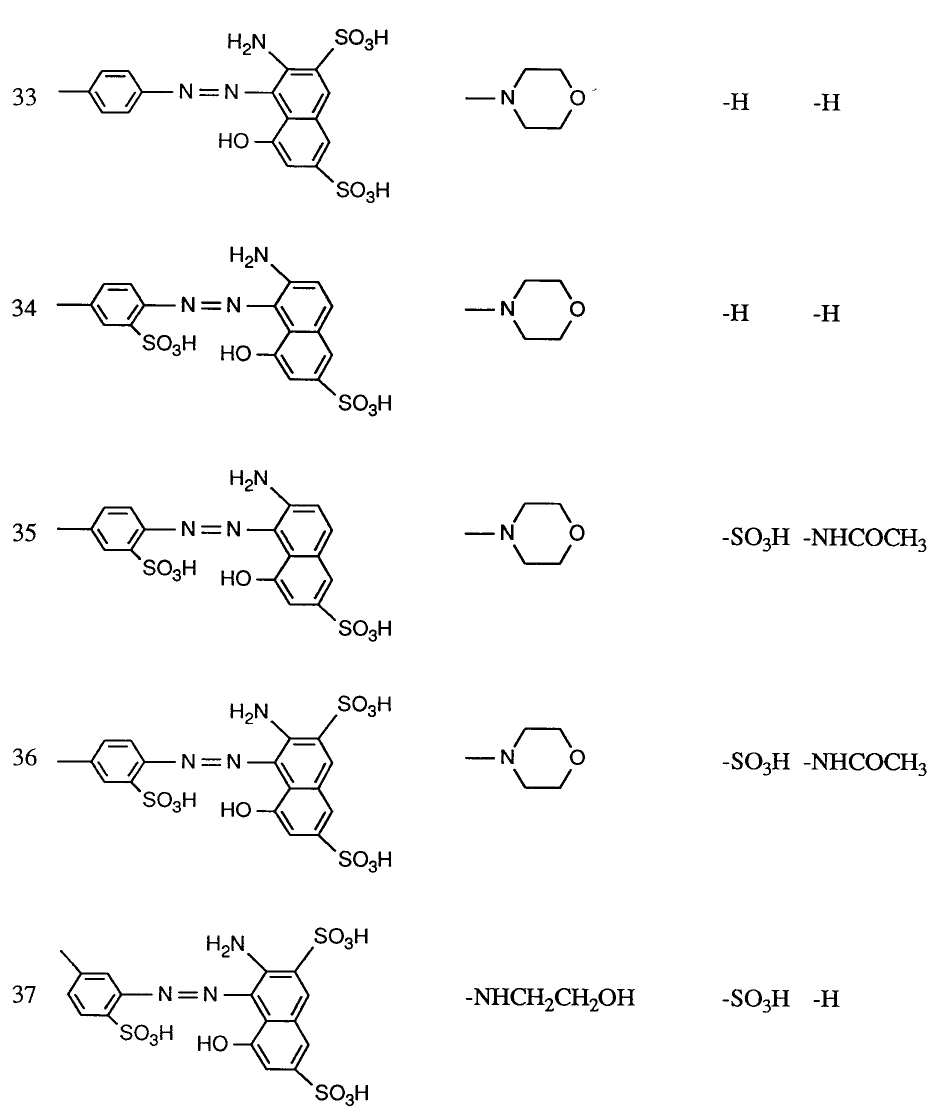

### Färbevorschrift 1

10 Teile Baumwollgewebe (gebleicht und mercerisiert) werden bei ca. 30°C in ein Färbebad eingebracht, welches 200 Teile Wasser und 0,35 Teile Farbstoff des Beispiels 1 enthält. Die Flotte wird innerhalb von 30 Minuten auf 95°C erhitzt und 15 Minuten bei dieser Temperatur belassen. Dann werden 4 Teile Natriumsulfat zugesetzt und noch weitere 45 Minuten bei 95°C gefärbt. Danach wird das Färbebad innerhalb von 15 Minuten auf 80°C abgekühlt und noch 15 Minuten bei dieser Temperatur belassen. Die Färbung wird dann gründlich mit kaltem Wasser gespült und getrocknet.

### Färbevorschrift 2

10 Teile einer Fasermischung aus Polyester und Baumwolle werden bei ca. 50°C in ein Färbebad eingebracht, welches 200 Teile Wasser, ein Farbstoffgemisch bestehend aus 0,2 Teilen C.I. Disperse Red 60 und 0,2 Teilen des Farbstoffes gemäss Beispiel 1, 0,4 Teile Ammoniumsulfat sowie 0,2 Teile eines anionischen Dispersionsmittels (z.B. Formaldehyd-Kondensationsprodukt von Naphthalinsulfonsäure) enthält. Das Färbebad wird mit Ameisensäure auf einen pH-Wert von 5,5 eingestellt, 1 Teil Natriumsulfat zugesetzt und dann innerhalb von 45 Minuten auf ca. 130°C aufgeheizt. Man färbt weitere 45 Minuten bei 130°C, kühlt dann das Färbebad innerhalb von 30 Minuten auf ca. 80°C ab und belässt es weitere 45 Minuten bei dieser Temperatur. Die Färbung wird dann gründlich mit kaltem Wasser gespült und getrocknet.

### Färbevorschrift 3

Man verfährt wie in den Färbevorschriften 1 oder 2 beschrieben, gibt jedoch nach Abschluss des Färbevorgangs die kalt gespülte Färbung in ein frisches ca. 30°C warmes Bad, welches 200 Teile Wasser und 0,2-0,6 Teile eines kationischen Nachbehandlungsmittels (Amin-Formaldehyd-Dicyandiamid-Kondensationsprodukt oder Zubereitung auf der Basis von Dicyandiamid und Diäthylentriamin) enthält. Die Färbung wird 30 Minuten bei 30°C nachbehandelt und anschliessend ohne weiteren Spülprozess getrocknet; man erhält eine Färbung mit verbesserten Nassechtheiten.

### Färbevorschrift 4

Man verfährt wie in den Färbevorschriften 1 oder 2 beschrieben, gibt jedoch nach Abschluss des Färbevorgangs die kalt gespülte Färbung in ein frisches ca. 25°C warmes Bad, welches 200 Teile Wasser, 1 Teil Natriumsulfat und 0,6 Teile eines faserreaktiven kationischen Nachbehandlungsmittels auf Basis von N-Methyldialkylamin und Epichlorhydrin enthält. Die Temperatur wird innerhalb von 15 Minuten auf 40°C erhöht, 0,8 Teile 30%ige Natriumhydroxidlösung zugegeben und die Färbung weitere 45 Minuten bei 40°C behandelt. Die Färbung wird schliesslich heiss gespült und getrocknet; sie weist verbesserte Nassechtheiten auf.

## Patentansprüche

1. Azofarbstoffe der Formel 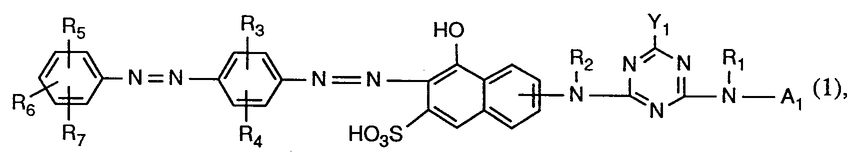 worin
R₁ und R₂ unabhängig voneinander Wasserstoff oder gegebenenfalls substituiertes C₁-C₄-Alkyl bedeuten,
R₃, R₄, R₅, R₆ und R₇ unabhängig voneinander Wasserstoff, Halogen, Sulfo, Carbamoyl, Carboxy, unsubstituiertes oder durch Hydroxy substituiertes C₁-C₄-Alkyl oder C₁-C₄-Alkoxy, unsubstituiertes oder im Alkylteil durch Hydroxy oder C₁-C₄-Alkoxy substituiertes C₂-C₄-Alkanoylamino oder unsubstituiertes oder in der endständigen Aminogruppe ein- oder zweifach durch C₁-C₄-Alkyl substituiertes Ureido sind,
Y₁ Hydroxy, Halogen, C₁-C₄-Alkoxy, C₁-C₄-Alkylthio, Amino, unsubstituiertes oder im Alkylteil durch Hydroxy, Sulfo, Carboxy oder C₁-C₄-Alkoxy substituiertes N-Mono- oder N,N-Di-C₁-C₄-Alkylamino, unsubstituiertes oder im Cycloalkylring durch C₁-C₄-Alkyl substituiertes C₅-C₇-Cycloalkylamino, unsubstituiertes oder im Phenylring durch C₁-C₄-Alkyl, C₁-C₄-Alkoxy, Carboxy, Sulfo oder Halogen substituiertes Phenylamino oder N-C₁-C₄-Alkyl-N-phenylamino, Morpholino oder Piperidin-1-yl ist, und
A₁ der Rest eines metallfreien Monoazofarbstoffes ist.

2. Azofarbstoffe gemäss Anspruch 1, worin
R₁ und R₂ Wasserstoff oder C₁-C₄-Alkyl, insbesondere Wasserstoff, bedeuten.

3. Azofarbstoffe gemäss einem der Ansprüche 1 und 2, worin
R₃ und R₄ unabhängig voneinander Wasserstoff, C₁-C₄-Alkyl, C₁-C₄-Alkoxy, C₂-C₄-Alkanoylamino oder Sulfo sind.

4. Azofarbstoffe gemäss einem der Ansprüche 1 bis 3, worin
R₅ Sulfo oder Carbamoyl ist und R₆ und R₇ unabhängig voneinander Wasserstoff, C₁-C₄-Alkyl oder C₁-C₄-Alkoxy sind.

5. Azofarbstoffe gemäss einem der Ansprüche 1 bis 4, worin
Y₁ Amino, unsubstituiertes oder im Alkylteil durch Hydroxy, Sulfo, Carboxy oder C₁-C₄-Alkoxy substituiertes N-Mono- oder N,N-Di-C₁-C₄-Alkylamino, unsubstituiertes oder im Cycloalkylring durch C₁-C₄-Alkyl substituiertes C₅-C₇-Cycloalkylamino, unsubstituiertes oder im Phenylring durch C₁-C₄-Alkyl, C₁-C₄-Alkoxy, Carboxy, Sulfo oder Halogen substituiertes Phenylamino oder N-C₁-C₄-Alkyl-N-phenylamino, Morpholino oder Piperidin-1-yl ist.

6. Azofarbstoffe gemäss einem der Ansprüche 1 bis 5, worin
Y₁ Amino, unsubstituiertes oder im Alkylteil durch Hydroxy substituiertes N-Mono- oder N,N-Di-C₁-C₄-Alkylamino, Cyclohexylamino, Phenylamino, Morpholino oder Piperidin-1-yl ist.

7. Azofarbstoffe gemäss einem der Ansprüche 1 bis 6, worin
Y₁ im Alkylteil durch Hydroxy substituiertes N-Mono- oder N,N-Di-C₁-C₄-Alkylamino oder Morpholino ist.

8. Azofarbstoffe gemäss Anspruch 1, worin
R₁ und R₂ Wasserstoff,
R₃ und R₄ unabhängig voneinander Wasserstoff, C₁-C₄-Alkyl, C₁-C₄-Alkoxy, C₂-C₄-Alkanoylamino oder Sulfo sind,
R₅ Sulfo oder Carbamoyl ist und R₆ und R₇ unabhängig voneinander Wasserstoff, C₁-C₄-Alkyl oder C₁-C₄-Alkoxy sind, und
Y₁ Amino, unsubstituiertes oder im Alkylteil durch Hydroxy substituiertes N-Mono- oder N,N-Di-C₁-C₄-Alkylamino, Cyclohexylamino, Phenylamino, Morpholino oder Piperidin-1-yl ist.

9. Azofarbstoffe gemäss Anspruch 8, worin
R₁ und R₂ Wasserstoff,
R₃ und R₄ unabhängig voneinander Wasserstoff, Sulfo oder C₂-C₄-Alkanoylamino sind,
R₅ Sulfo ist und R₆ und R₇ Wasserstoff sind, und
Y₁ im Alkylteil durch Hydroxy substituiertes N-Mono- oder N,N-Di-C₁-C₄-Alkylamino oder Morpholino ist.

10. Azofarbstoffe gemäss einem der Ansprüche 1 bis 9, worin A₁ einen Rest der Formel 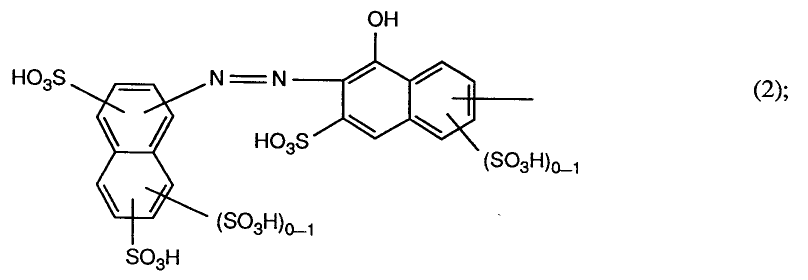 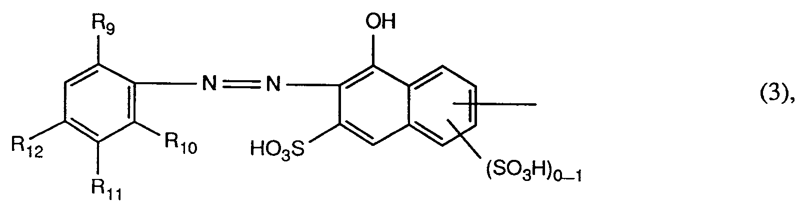 worin R₉, R₁₀, R₁₁ und R₁₂ unabhängig voneinander Wasserstoff, Sulfo, Carboxy, Halogen, Cyano, Ureido, unsubstituiertes oder durch Hydroxy substituiertes C₁-C₄-Alkyl oder C₁-C₄-Alkoxy, oder unsubstituiertes oder im Alkylteil durch Hydroxy oder C₁-C₄-Alkoxy substituiertes C₂-C₄-Alkanoylamino bedeuten; 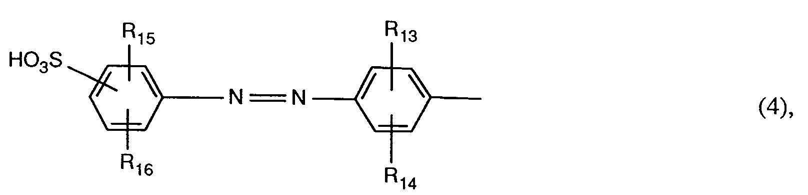 worin R₁₃, R₁₄, R₁₅ und R₁₆ die oben für R₉, R₁₀, R₁₁ und R₁₂ angegebenen Bedeutungen haben; 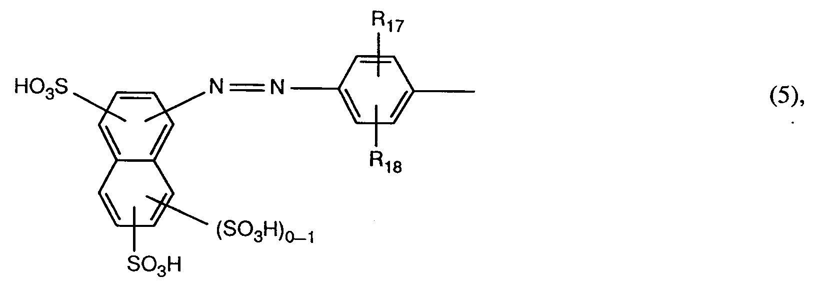 worin R₁₇ und R₁₈ die oben für R₉, R₁₀, R₁₁ und R₁₂ angegebenen Bedeutungen haben; 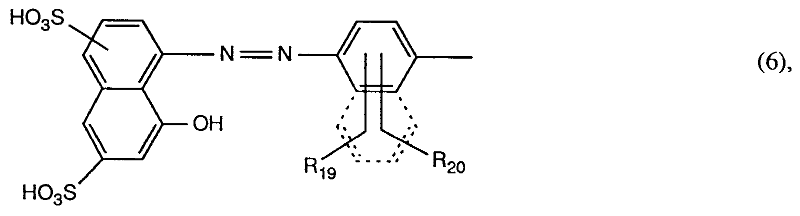 worin R₁₉ und R₂₀ die oben für R₉, R₁₀, R₁₁ und R₁₂ angegebenen Bedeutungen haben; oder 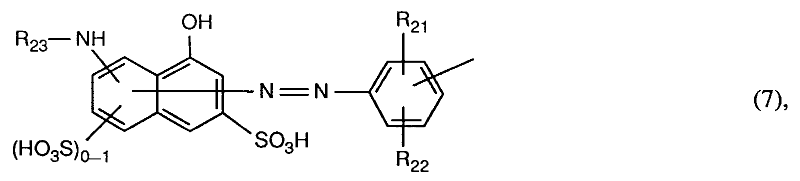 worin R₂₁ und R₂₂ die oben für R₉, R₁₀, R₁₁ und R₁₂ angegebenen Bedeutungen haben und
R₂₃ Wasserstoff, gegebenenfalls durch Hydroxy oder C₁-C₄-Alkoxy substituiertes C₂-C₆-Alkanoyl, oder gegebenenfalls im Phenylring durch C₁-C₄-Alkyl, C₁-C₄-Alkoxy, C₂-C₄-Alkanoylamino, Sulfo, Carboxy, Halogen, Cyano oder Ureido substituiertes Phenyl oder Benzoyl ist; darstellt.

11. Azofarbstoffe gemäss Anspruch 10 der Formel 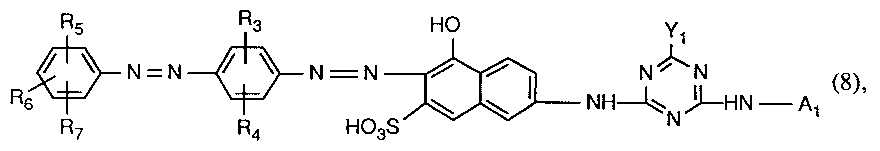 worin
R₃ und R₄ unabhängig voneinander Wasserstoff, Sulfo oder C₂-C₄-Alkanoylamino sind,
R₅ Sulfo ist und R₆ und R₇ Wasserstoff sind,
Y₁ im Alkylteil durch Hydroxy substituiertes N-Mono- oder N,N-Di-C₁-C₄-Alkylamino oder Morpholino ist, und
A₁ ein Rest der Formel (3), (6) oder (7) ist.

12. Verfahren zur Herstellung von Azofarbstoffen der Formel (1) gemäss Anspruch 1, dadurch gekennzeichnet, dass man eine Verbindung der Formel 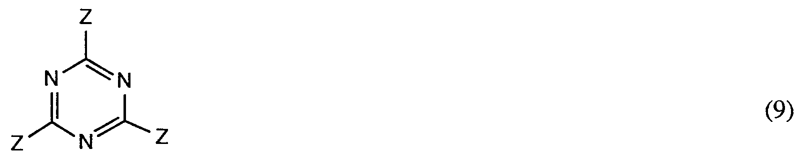 nacheinander in beliebiger Reihenfolge mit einer Verbindung der Formel 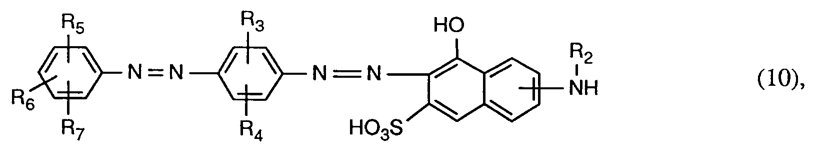 einer Verbindung der Formel
A₁-NH-R₁ (11)
und einer Verbindung der Formel
Y₁-H 12)
umsetzt, wobei R₁, R₂, R₃, R₄, R₅, R₆, R₇, Y₁ und A₁ jeweils die im Anspruch 1 angegebene Bedeutung haben und Z Halogen, vorzugsweise Chlor, bedeutet.

13. Verwendung der Azofarbstoffe nach einem der Ansprüche 1 bis 11 bzw. der gemäss Anspruch 12 erhaltenen Azofarbstoffe zum Färben oder Bedrucken von stickstoffhaltigen oder hydroxygruppenhaltigen Fasermaterialien.

14. Verwendung nach Anspruch 13, dadurch gekennzeichnet, dass man Fasergemische aus Synthesefasern und cellulosischen Fasermaterialien, insbesondere Polyester/Baumwoll-Mischgewebe, in Gegenwart eines Dispersionsfarbstoffes für die Polyesterfasern unter den Färbebedingungen für Polyesterfasern färbt.

15. Verfahren zum Färben von Polyester/Baumwoll-Mischgeweben mit Dispersions- und Direktfarbstoffen, dadurch gekennzeichnet, dass man in einem einstufigen, einbadigen Verfahren neben den Dispersionsfarbstoffen Farbstoffe der Formel (1) gemäss Anspruch 1 verwendet und aus wässriger Flotte bei Temperaturen im Bereich von 100 bis 150°C, vorzugsweise 120 bis 130°C, und einem pH-Wert zwischen 4 und 7,5 färbt.
